# EUROPÄISCHE PATENTSCHRIFT

(11) **EP 0 958 915 B1**
(45) Veröffentlichungstag und Bekanntmachung des Hinweises auf die Patenterteilung: **03.03.2004**
(21) Anmeldenummer: 99109985.4
(22) Anmeldetag: 21.05.1999
(51) Int. Cl.: B32B 27/32

(54) **Verfahren zu zur Herstellung einer Polyolefinfolie und ihre Verwendung.**
Method for producing a polyolefin film and its use.
Méthode pour la production d'une feuille en polyoléfine et son utilisation.

(30) Priorität: 23.05.1998 DE 19823162
(43) Veröffentlichungstag der Anmeldung: 24.11.1999
(73) Patentinhaber: Trespaphan GmbH, 66539 Neunkirchen (DE)
(72) Erfinder: Rasp, Wolfgang, 66424 Homburg (DE); Busch, Detlef Klaus, 66740 Saarlouis (DE)
(74) Vertreter: Luderschmidt, Schüler & Partner GbR

(56) Entgegenhaltungen:
- EP-A- 0 621 129
- US-A- 4 692 380

## Beschreibung

Die Erfindung betrifft die Verwendung einer mehrschichtigen Polyolefinfolie, aus einer Basisschicht und mindestens einer Deckschicht zur Herstellung eines Laminats mittels Schmelzeextrusion. Die Erfindung betrifft ferner ein Verfahren zur Herstellung des Laminats.

Die Verpackungsindustrie fordert für bestimmte Anwendungszwecke Verpackungsmaterialien mit Eigenschaften, die nicht alle an einer einzigen Folie realisiert werden können. Aus diesem Grund fügt man häufig verschiedene Folientypen zu einem sogenannten Laminat zusammen. Für diese Laminierung werden Klebstoffe oder Haftvermittler benötigt die dafür sorgen, daß die laminierten Folien ausreichend fest aneinander haften.

Darüber hinaus muß das resultierende Folienlaminat gewisse Anforderungen erfüllen, insbesondere Eigenschaftskombinationen aufweisen die zum einen die einzelne Folle nicht hat und zum anderen selbst für ein Laminat aus verschiedenen Komponenten schwierig zu realisieren sind.

Die Auswahl geeigneter Folien für die Herstellung des Laminats in Verbindung mit dem Auffinden des richtigen Haftvermittlers und Wege zur kostengünstigen Herstellung sind immer wiederkehrende Probleme in der Fachwelt der Verpackungsmaterialien.

Ein kostengünstiges Verfahren zur Herstellung derartiger Laminate ist die sogenannte Extrusionslaminierung. Bei diesem Verfahren wird auf eine Folie, die vorher in einem separaten Verfahren hergestellt wurde, mittels Extrusion eine dünne Polyethylenschicht aufgetragen und diese mit aufgeschmolzenem Polyethylen versehene Folie direkt mit einer weiteren Folien zusammengeführt. Die aufgeschmolzene Polyethylenschicht dient quasi als Haftschicht zwischen den beiden laminierten Folien. Dieses Verfahren ist günstig, da Polyethylen als Haftschicht preiswert ist und die mechanischen Eigenschaften des Laminats durch die Polyethylenschicht verbessert werden.

Die deutsche Patentanmeldung P 41 35 096.0 offenbart Polyolefin-Mehrschichtfolien aus einer Polypropylenbasisschicht und einer Deckschicht aus einem HDPE-Blend. Dieses HDPE-Blend besteht aus HDPE und Co - und/oder Terpolymeren aus a-Olefinen und gegebenenfalls Polypropylen. Die Deckschicht der Mehrschichtfolie weist einen minimalen Glanz und eine maximale Trübung auf, wodurch der Folie ein charakteristisches mattes Aussehen verliehen wird.

Eine beidseitig siegelbare, biaxial orientierte Polyolefinfolie mit drei Schichten ist aus der US-A-4419411 bekannt. Bei diesen Folien ist in beiden Siegelschichten Polysiloxan und Siliciumdioxid als Additivkombination inkorporiert. Die Basisschicht besteht im wesentlichen aus Polypropylen und enthält eine geringe Menge Monocarbonsäureamid, welches teilweise von der Basisschicht in die beiden Siegelschichten migriert. Die beschriebene Polyolefin-Mehrschichtfolie soll einen besonders niedrigen Reibungskoeffizienten aufweisen.

Die US 4,692,380 beschreibt eine metallisierte biaxial orientierte Polypropylenfolie, welche sich durch eine gute Metallhaftung und eine gute Lauffähigkeit auszeichnet. Die Folie besteht aus einer Polypropylen Basisschicht, mit 0,03 - 0,15% Fettsäureamid als Gleitmittel. Die metallisierte Deckschichten besteht aus Propylen-Ethylen Copolymer und ist auf ihrer Oberfläche mittels Corona vorbehandelt.

EP 0 621 129 beschreibt eine matte Transfermetallisierungsfolie. Die Folie weißt eine Deckschicht auf, die aus Propylenpolymeren und HDPE zusammengesetzt ist und eine matte Optik aufweißt. Die Basisschicht enthält migrierende Additive, welche die Metallhaftung vermindern. Die Metallschicht kann nach Metallisierung der matten Oberfläche auf ein anderes Substrat übertragen werden.

Die Aufgabe der vorliegenden Erfindung bestand darin, eine Folie zur Verfügung zu stellen, die für die Extrusionslaminierung geeignet sein soll, die beidseitig bedruckbar ist und einen niedrigen Reibungskoeffizienten aufweist, wobei die Werte des dynamischen und des statischen Reibungskoeffizienten einer Seite nicht erheblich voneinander abweichen sollen. Für die Laminierung muß die Folie unbedingt eine gute Haftung gegenüber einer mittels Schmelzextrusion aufgetragenen Polyethylenschicht aufweisen. Dabei ist es auch wesentlich, daß diese guten Hafteigenschaften durch Lagerung oder Alterung des Laminats nicht beeinträchtigt werden, d.h. der Verbund muß nach einer gewissen Lagerzeit noch die gleiche gute Verbundfestigkeit wie unmittelbar nach der Herstellung aufweisen.

Erfindungsgemäß wird diese Aufgabe durch die Verwendung einer mehrschichtigen, biaxial orientierten Polyolefinfolie zur Herstellung eines Laminats mittels Schmelzeextrusion gelöst. Die Polyolefinfolie weißt eine Basisschicht und mindestens eine Deckschicht D1 auf, wobei die Basisschicht ein Fettsäureamid enthält und die Deckschicht D1 mindestens 80 Gew.-%, eines lineares Olefinpolymer enthält. Das lineares Olefinpolymer enthält 99,5 - 92 Gew.-% Ethylen und 0,5 - 8 Gew.-% Okteneinheiten und das Kristallisationsintervall des linearen Olefinpolymers, bestimmt mittels DSC bei 20K/min, liegt im Bereich von 90 - 120°C.

Die Deckschicht D1 der Mehrschichtfolie enthält mindestens 80 Gew.-%, vorzugsweise 90 bis 100 Gew.-%, insbesondere 95 bis 98 Gew.-%, lineares Polyolefin, jeweils bezogen auf das Gewicht der Deckschicht.

Für die Zwecke der vorliegenden Erfindung geeignete lineare Polyolefine und deren Herstellung sind in US 5,272,236 beschrieben, auf welche hiermit ausdrücklich Bezug genommen wird. Von den in US 5,272,236 beschriebenen linearen Polyolefinen sind solche bevorzugt, welche 99,5 - 92 Gew.-% Ethylen und 0,5 bis 8 Gew.-%, vorzugsweise 1 bis 6 Gew.-% Okteneinheiten (C8) enthalten. Der Oktenanteil ist vorzugsweise derartig in die Ethylen-Kettenmatrix eingebaut werden, daß sich das lineare Olefinpolymer durch eine besondere Langkettenverzweigung auszeichnet. Im GPC zeigt das bevorzugte lineare Olefinpolymer nur ein Peak Maximum, dessen Lage vom Molekulargewicht abhängig ist. Im Gegensatz dazu weisen die herkömmlichen C₂-C₈-Copolymere, hergestellt mit Ziegler-Natta Katalysatoren, einen Doppelpeak, bestehend aus einem LDPE und einem HDPE Absorptionsmaximum, auf.
Das bevorzugte lineare Olefinpolymere zeichnet sich durch besonders langkettige Verzweigungen aus. Die Kettenlänge der Verzweigung entspricht der Formel 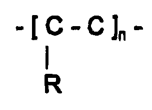 mit R > 6 C-Atomen für das lineare Polyolefin, vorzugsweise 8 bis 15 C-Atome

Die C2C8-Copolymeren nach dem Stand der Technik haben kürzer verzweigte Ketten, entsprechend wäre bei diesen R = 6 C-Atome.

Gemessen im dynamischen Viskosimeter ergibt die hohe Langkettenverzeigung des linearen Olefinpolymers eine hohe Strukturviskosität bei kleinen Scherraten mit einem starken Abfall bei einer Schergeschwindigkeit von 100 1/s durch den eintretenden Schmiereffekt der hohen Langkettenverzweigung gegen die C₂-Kettenmatrix. Das Kristallisationsintervall, bestimmt im DSC aus der Aufheiz- und Abkühlkurve bei 20 K/min Temperaturveränderungsrate, liegt bei 90-120°C, vorzugsweise 100-110°C.

Es wurde gefunden, daß die Deckschicht aus linearem Polyolefin eine hervorragende Haftung gegenüber Polyethylen als Extrusionsschicht aufweisen. Diese gute Haftung wird überraschenderweise durch den Zusatz von Fettsäureamiden nur unwesentlich beeinträchtigt. Dadurch ist es möglich mittels Zusatz von Fettsäureamiden in der Basisschicht den Reibungskoeffizienten in an sich bekannter Weise zu erniedrigen, ohne daß dadurch die hervorragende Haftung der Deckschicht gegenüber Polyethylen bei der Extrusionslaminierung beeinträchtigt wird.

Dies ist um so überraschender als bei einer Vielzahl von Versuchen mit anderen Deckschichtmaterialien immer wieder festgestellt wurde, daß eine gute Haftung gegenüber der Extrusionsschicht nur gegeben ist, wenn die Folie frei von reibungsvermindernden Fettsäureamiden bleibt. Nur bei Auswahl des oben beschriebenen linearen Polyolefins als Deckschicht ist es gleichzeitig möglich einerseits den niedrigen Reibungskoeffizienten durch den Zusatz von Fettsäureamiden und andererseits eine gute Haftung dieser Deckschicht bei der Extrusionsbeschichtung mit Polyethylen zu erhalten.

Zusätzlich wurde gefunden, daß das lineare Polyolefin auch für eine Coextrusion mit der Polypropylenbasisschicht sehr gut geeignet ist und in nachfolgenden Verarbeitungsschritten nicht unvorhergesehen von der orientierten Polypropylenbasisschicht delaminiert. Es wurde mit der vorliegenden Erfindung ein Polymer gefunden, welches als Deckschicht D1 einerseits die geforderte hohe Haftung gegenüber der Polyethylenschicht und gleichzeitig eine gute Haftung auf der Basisschicht aufweist, d.h. neben hohen Festigkeiten absolut betrachtet ist auch die notwendige Ausgewogenheit der Haftfestigkeiten gegeben. Diese Ausgewogenheit ist ein zusätzliches wichtiges Erfordernis, welches bei der fertigen Beutelverpackung aus dem Laminat gewährleistet, daß der Beutel an der vorgesehenen Grenzfläche, nämlich in der Siegelschicht aufreißt. Eine Deckschicht D1 die einseitig nur eine hohe Haftfestigkeit gegenüber der Extrusionsschicht aufweist, ist nicht geeignet. Ein derartiger Verbund führt dazu, daß beim Öffnen des Beutels die Deckschicht D1 von der Basisschicht delaminiert und dann der Verbund völlig unkontrolliert weiterreißt.

In einer bevorzugten Ausführungsform enthält die Deckschicht D1 ein Antiblockmittel, im allgemeinen in einer Menge von 0,05 bis 1 Gew.-%, vorzugsweise 0,1 bis 0,5 Gew.-% und mit einer mittlere Teilchengröße zwischen 1 und 6 µm, insbesondere 2 und 5 µm. Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polymethylmethacrylat, Polycarbonate und dergleichen, worunter Siliciumdioxid bevorzugt ist. Der Zusatz von Antiblockmittel in D1 trägt zu einem problemlosen Wickelverhalten der Folie bei ihrer Verarbeitung bei.

Des weiteren ist es bevorzugt die Oberfläche D1 einem Verfahren zur Erhöhung der Oberflächenspannung zu unterwerfen. Hierfür sind die später, im Zusammenhang mit dem Herstellverfahren, beschriebenen Flamm- oder Coronabehandlungen bevorzugt. Die erhöhte Oberflächenspannung verbessert die Bedruckbarkeit der Folie.

Überraschenderweise stört weder das Antiblockmittel noch die Oberflächenbehandlung die erfindungswesentliche gute Haftung der Deckschicht D1 gegenüber der Extrusionsschicht aus Polyethylen.

Die Basisschicht der erfindungsgemäßen Mehrschichtfolie enthält Propylenpolymer im allgemeinen in einer Menge von mindestens 80 Gew.-%, vorzugsweise 90 bis 100 Gew.-%, insbesondere 95 bis 98 Gew.-%, jeweils bezogen auf das Gewicht der Basisschicht. Das Propylenpolymer enthält im allgemeinen mindestens 90 Gew.-%, vorzugsweise 95 bis 100 Gew.-%, insbesondere 98 bis 100 Gew.-% Propylen, jeweils bezogen auf das Gewicht des Polymeren. Als Comonomere in der entsprechenden Menge von höchstens 10 Gew.-%, bzw. höchstens 5 oder 2 Gew.-% sind grundsätzlich Olefine mit 2 oder 4 bis 10 C-Atomen geeignet, wobei Ethylen oder Butylen bevorzugt sind. Geeignete Polypropylene der Basisschicht besitzen im allgemeinen einen Schmelzpunkt von 140°C oder höher, vorzugsweise 150 bis 170°C und einen Schmelzflußindex von 0,5 bis 10g/10min, vorzugsweise 1,5 bis 4g/10min, bei 230°C und einer Kraft von 2,16 kg (DIN 53 735). Isotaktisches Polypropylen mit über 98 Gew.-% Propylen und einem n-heptanlöslichen Anteil von höchstens 10 Gew.-%, vorzugsweise 1 bis 5 Gew.-%, bezogen auf das isotaktische Polypropylen, sind bevorzugt.

Es ist erfindungswesentlich, daß die Basisschicht Fettsäureamide, vorzugsweise in einer Menge von 0,01 bis 0,5 Gew.-%, bezogen auf das Gewicht der Basisschicht enthält. Es wurde gefunden, daß mit weniger als 0,01 Gew.-% der Reibungskoeffizient des Laminats auf der Deckschichtseite D2 zu hoch ist. Bei einer Menge von über 0,5 Gew.-% wird die Haftung der Folie gegenüber der Extrusionsschicht aus Polyethylen schlecht.

Fettsäureamide sind im Sinne der vorliegenden Erfindung Verbindungen der Formel 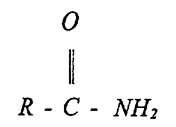 worin R einen langkettigen aliphatischen Alkylrest mit 10 bis 20, vorzugsweise mit 12 bis 16 C-Atomen bedeutet. Der Alkylrest R ist vorzugsweise im wesentlichen unverzweigt und im wesentlichen gesättigt. Besonders geeignete Fettsäureamide sind Erucasäureamid oder Stearinsäureamid.

Wie vorstehend erläutert ist es überraschend, daß das Fettsäureamid in der Deckschicht in die es bekanntermaßen migriert, die Haftung dieser Deckschicht bei der Extrusionslaminierung nicht nachteilig beeinflußt.

In einer bevorzugten Ausführungsform weißt die erfindungsgemäße Mehrschichtfolie eine weiter Deckschicht D2 auf der gegenüberliegenden Seite auf. Diese Deckschicht D2 enthält eine im folgenden näher beschriebene Mischung zweier Komponenten A und B, im allgemeinen in einer Menge von mindestens 80 Gew.-%, vorzugsweise 90 bis 100 Gew.-%, insbesondere 95 bis 100 Gew.-%, jeweils bezogen auf das Gewicht der Deckschicht D2, und gegebenenfalls zusätzlich übliche Additive in jeweils wirksamen Mengen.

Mischungen im Sinne der vorliegenden Erfindung sind mechanische Mischungen oder Blends aus den einzelnen Komponenten. Mischungen werden aus den einzelnen Polymeren hergestellt. Hierzu werden im allgemeinen die einzelnen Bestandteile als gepreßte Formkörper kleiner Größe, z.B. linsen- oder kugelförmiges Granulat, zusammengeschüttet und mit einer geeigneten Vorrichtung mechanisch gemischt.

Ein Blend ist ein legierungsartiger Verbund der einzelnen Komponenten, welcher nicht mehr in die ursprünglichen Bestandteile zerlegt werden kann. Ein Blend weist Eigenschaften wie ein homogener Stoff auf und kann entsprechend durch geeignete Parameter charakterisiert werden. Für die Herstellung des Blends werden die Komponenten im geschmolzenen Zustand miteinander vermischt und diese Mischung anschließend wieder abgekühlt und granuliert.

Die Komponente A der Mischung bzw. des Blends ist ein Propylenhomopolymer, welches mindestens 98 Gew.-%, vorzugsweise 100 Gew.-% Propylen, jeweils bezogen auf das Gewicht des Polymeren, enthält. Isotaktisches Propylenhomopolymer mit einem n-heptanlöslichen Anteil von höchstens 10Gew.-%, vorzugsweise 1 bis 5 Gew.-%, bezogen auf das isotaktische Propylenhomopolymer, ist bevorzugt. Geeignete Propylenhomopolymer besitzen im allgemeinen einen Schmelzpunkt von 140°C oder höher, vorzugsweise 150 bis 170°C und einen Schmelzflußindex (MFI) von 3 bis 10g/10min, vorzugsweise 5 bis 8g/10min, bei 230°C und einer Kraft von 2,16 kg (DIN 53 735). Dabei sollte dieser MFI mindestens 30%, vorzugsweise 40 bis 60% höher liegen als der MFI des Polypropylens der Basisschicht.

Die Komponente B der Mischung bzw. des Blends ist ein Propylenco- und/oder Popylenterpolymer, welches überwiegend aus Propyleneinheiten aufgebaut ist. Bevorzugt sind
Copolymere aus
Propylen und Ethylen oder
Propylen und Butylen oder
Propylen und einem anderen Olefin mit 5 bis 10 Kohlenstoffatomen oder
Terpolymere aus
Propylen und Ethylen und Butylen oder
Propylen und Ethylen und einem anderen Olefin mit 5 bis 10 Kohlenstoffatomen oder
Mischung oder Blends aus den genannten Co- und Terpolymeren.

Bevorzugt enthalten die Co- und Terpolymeren eine Propylenanteil von über 50 Gew.-%, bezogen auf das Gewicht des Polymeren, wobei
- statistische Propylen-Ethylen-Copolymere mit einem Ethylengehalt von 2 bis 10 Gew.-%, bevorzugt 3 bis 6Gew.-%, oder
- statistische Propylen-Butylen-1-Copolymere mit einem Butylengehalt von 20 bis 50 Gew.-%, bevorzugt 25 bis 45Gew.-% oder
- statistische Ethylen-Propylen-Butylen-Terpolymere mit einem Ethylengehalt von 1 bis 10 Gew.-%, bevorzugt 2 bis 6Gew.-%, und einem Butylengehalt von 2 bis 20 Gew.-%, bevorzugt 3 bis 10Gew.-% oder
- ein Blend aus einem Ethylen-Propylen-Butylen-Terpolymeren und einem Propylen-Butylen-Copolymeren mit einem Ethylengehalt von 0,1 bis 7 Gew.-% und einem Butylen-1-Gehalt von 10 bis 30 Gew.-%, (Rest Propylen).
bevorzugt sind.

Die vorstehend beschriebenen Co- und Terpolymeren weisen im allgemeinen einen Schmelzflußindex von 1,5 bis 30g/10min, vorzugsweise von 3 bis 15g/10min, und einen Schmelzpunkt im Bereich von 115 - 135°C auf. Das vorstehend beschriebene Blend aus Co- und Terpolymeren hat einen Schmelzflußindex von 5 bis 9g/10min, wobei die angegebenen Schmelzflußindices bei 230°C und einer Kraft von 2,16 kg (DIN 53 735) gemessen werden. Dabei sollte dieser MFI der Co- und Terpolymeren mindestens 30%, vorzugsweise 40 bis 60% höher liegen als der MFI des Polypropylens der Basisschicht. Um eine gute Durchmischung der Co- und Terpolymeren mit dem Homopolymer der Deckschicht D2 sicherzustellen sollen die MFIs der Komponenten A und B im allgemeinen nicht mehr als 20% voneinander abweichen.

Das Verhältnis (Gewichtsverhältnis) der beiden Komponenten A und B der Deckschichtmischung bzw. des Blends kann innerhalb gewisser Grenzen variieren und richtet sich nach dem beabsichtigten Einsatzzweck der Mehrschichtfolie. Bevorzugt enthält die Mischung 50 bis 90 Gew.-%, vorzugsweise 60 bis 80 Gew.-% der Komponenten A und zwischen 10 bis 50 Gew.-%, vorzugsweise 20 bis 40 Gew.-% der Komponente B.

Wird die Deckschichtmischung aus den Komponenten A und B als Blend eingesetzt, so hat dieses Blend im allgemeinen einen Schmelzflußindex (DIN 53 735 bei 230°C und 2,16 kg Belastung) von 1,5 g/10min bis 12 g/10min, vorzugsweise von 2,5 g/10min bis 6 g/10min, wobei auch der Schmelzflußindex des Blends bevorzugt höher liegt als jener des Propylenpolymeren der Basisschicht. Der Schmelzbereich des Blends liegt zwischen 100 und 160°C, vorzugsweise zwischen 120 und 150°C.

In einer bevorzugten Ausführungsform enthält die Deckschicht D2 zusätzlich Antiblockmittel. Gegebenenfalls kann hier das gleiche Antiblockmittel in vergleichbaren Mengen wie für die Deckschicht D1 beschrieben eingesetzt werden. Bevorzugt werden jedoch solche Antiblockmittel eingesetzt, die den Reibungskoeffizienten überraschenderweise noch weiter herabsetzen. Zu diesem Zweck haben sich insbesondere Polymethylmethacrylatteilchen (PMMA) oder Alkali-Erdalkalisilicate mit einer mittleren Teilchengröße von 2 bis 6 µm bewährt. Diese bevorzugten Antiblockmittel werden im allgemeinen in einer Menge von 0,01 bis 0,5 Gew.-%, vorzugsweise 0,3 Gew.-% bezogen auf das Gewicht der Deckschicht, eingesetzt.

Gegebenenfalls kann die Deckschicht D2 zusätzlich zu den Antiblockmitteln ein Gleitmittel, vorzugsweise die vorstehend für die Basisschicht beschriebenen Fettsäureamide, enthalten, im allgemeinen in einer Menge von 0,01 bis 0,5 Gew.-%, bezogen auf das Gewicht der Deckschicht.

Wie die Deckschicht D1 kann auch D2 einem Verfahren zur Erhöhung der Oberflächenspannung unterworfen werden. Auch hierfür sind die später, im Zusammenhang mit dem Herstellverfahren, beschriebenen Flamm- oder Coronabehandlungen bevorzugt. Die erhöhte Oberflächenspannung verbessert die Bedruckbarkeit der Folie auch auf dieser Oberfläche.

Die erfindungsgemäße Zusammensetzung der Deckschicht D2 in Verbindung mit der Zusammensetzung der Basisschicht gewährleistet, daß sich der dynamische Reibungskoeffizient und der statische Reibungskoeffizient der Deckschicht D2 um nicht mehr als 0,2 , vorzugsweise um nicht mehr als 0,1 Einheit unterscheiden.

Die erfindungsgemäße Mehrschichtfolie umfaßt zumindest die vorstehend beschriebene Basisschicht und mindestens die Deckschicht D1, vorzugsweise zusätzlich die Deckschicht D2 auf der gegenüberliegenden Seite. Je nach ihrem vorgesehenen Verwendungszweck kann zusätzlich eine Zwischenschicht/en zwischen der Basis- und der/den Deckschicht/en aufgebracht werden.

Die Gesamtdicke der erfindungsgemäßen Polyolefin-Mehrschichtfolie beträgt im allgemeinen 5 bis 40 µm, insbesondere 10 bis 30 µm, wobei die Basisschicht etwa 50 bis 90% der Gesamtfoliendicke ausmacht. Die Deckschicht D1 ist im allgemeinen 0,3 bis 2,0 µm dick. Die Dicke der Deckschicht D2 liegt im allgemeinen im Bereich von 0,2 bis 2,0 µm.

Die Dichte der erfindungsgemäßen Folie beträgt mindestens 0,8g/cm³ und liegt bevorzugt im Bereich von 0,9 bis 0,92g/cm³.

Um bestimmte Eigenschaften der erfindungsgemäßen Polypropylenfolie noch weiter zu verbessern, können sowohl die Basisschicht als auch die Deckschicht/en weitere Zusätze in einer jeweils wirksamen Menge enthalten, vorzugsweise Antistatika, Stabilisatoren und/oder Neutralisationsmittel, die mit den Polymeren der Basisschicht und der Deckschicht/en verträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Als Stabilisatoren können die üblichen stabilisierend wirkenden Verbindungen für Ethylen-, Propylen- und andere Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate. Phenolische Stabilisatoren werden in einer Menge von 0,1 bis 0,6 Gew.-%, insbesondere 0,15 bis 0,3 Gew.-%, und mit einer Molmasse von mehr als 500g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Dihydrotalcit (DHT), Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 m²/g.

Bevorzugte Antistatika sind Alkali-alkansulfonate, polyethermodifizierte, d.h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit w-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,7 Gew.-%.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gemeinsam und gleichzeitig durch eine Flachdüse (Breitschlitzdüse) coextrudiert, und die ausgepreßte mehrschichtige Folie wird auf einer oder mehreren Abzugswalzen abgezogen, wobei sie abkühlt und sich verfestigt.

Es hat sich als besonders günstig erwiesen, die Abzugswalze oder -walzen durch einen Heiz- und Kühlkreislauf bei einer Temperatur von 10 bis 80°C, vorzugsweise 20 bis 50°C, zu halten.

Die so erhaltene Folie wird dann längs und quer zur Extrusionsrichtung gestreckt, was zu einer Orientierung der Molekülketten führt. Diese biaxiale Streckung (Orientierung) kann simultan, z.B. im Blas- oder Flachfolienverfahren, oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

In Längsrichtung wird vorzugsweise 4:1 bis 11:1, insbesondere 4:1 bis 7:1 beim sequentiellen Streckverfahren und in Querrichtung vorzugsweise 4:1 bis 11:1, insbesondere 6:1 bis 10:1 beim sequentiellen Streckverfahren, gestreckt. Die Temperaturen, bei denen Längs- und Querstreckung durchgeführt werden, können variieren und richten sich nach der jeweiligen Zusammensetzung der Deckschichtmischung. Im allgemeinen wird die Längsstreckung vorzugsweise bei 100 bis 140°C und die Querstreckung vorzugsweise bei 155 bis 170°C durchgeführt.

An die biaxiale Streckung der Folie schließt sich ihre Thermofixierung (Wärmebehandlung) an, wobei die Folie etwa 0,5 bis 10s lang bei einer Temperatur von 140 bis 165°C gehalten wird. Anschließend wird die Folie in üblicher Weise mit einer Aufwickeleinrichtung aufgewickelt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt üblicherweise im Bereich von 38 bis 42 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3000V, vorzugsweise liegt sie im Bereich von 1500 bis 2000V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die Erfindung wird nun anhand von Ausführungsbeispielen noch näher erläutert:

### Beispiel 1

Nach dem Coextrusionsverfahren wurde aus einer Breitschlitzdüse bei einer Extrusionstemperatur von 260°C als Summe eine 1 mm dicke Dreischichtfolie mit einem Schichtaufbau D1/B/D2 extrudiert.

Die Basisschicht bestand im wesentlichen aus einem Propylenhomopolymerisat mit einem n-heptanlöslichen Anteil von 4,5 Gew.-% und einem Schmelzpunkt von 165°C und einem Schmelzflußindex von 3,2 g/10min bei 230°C und 2,16 kg Belastung (DIN 53 735). Zusätzlich enthielt die Basisschicht 0,15 Gew.-% eines N,N-bis(hydroxyethyl)-(C₁₀-C₂₀)-alkylamins und 0,14 Gew.-% Erucasäureamid.

Die Deckschicht D1 bestand im wesentlichen aus einem Polyethylen mit einem MFI von 3,0 g/10min (bei 190°C und 2,16 kg) und einem Vicat Erweichungspunkt von 101°C (nach ASTM-D1525) und einem Schmelzpunkt nach DSC von 122°C (Lineares Polyolefin der Fa. Dow Chemicals Europe) Zusätzlich enthielt die Deckschicht D1 0,2 Gew.-%, bezogen auf die Schicht, SiO₂ mit einer mittleren Teilchengröße von 4 µm als Antiblockmittel.

Die Deckschicht D2 bestand im wesentlichen aus einer Mischung zweier Komponenten A und B im Verhältnis A:B = 66:34 (Gewichtsverhältnis). Zusätzlich enthielt die Deckschicht D2 0,3 Gew.-%, bezogen auf die Schicht, Polymethylmethacrylat (PMMA) mit einer mittleren Teilchengröße von 4 µm als Antiblockmittel.

Komponente A war ein Propylenhomopolymerisat mit einem n-heptanlöslichen Anteil von 4,5 Gew.-% und einem Schmelzpunkt von 165°C. und einem Schmelzflußindex MFI von 6,0 g/10min bei 230°C und ,16 kg Belastung (DIN 53 735).

Komponente B war ein Propylen-Ethylen-Copolymeren mit einem Ethylengehalt von 3,5 Gew.-%, bezogen auf das Gewicht des Copolymeren und einem Schmelzpunkt von 138°C nach DSC-Messung und einem Schmelzflußindex von 6,0g/10min bei 230°C und 2,16 kg Belastung (DIN 53 735).

Die Komponenten A und B wurden im Verhältnis A:B = 34:66 in einem Henschel-Mischer 2 min lang bei 500/min mechanisch gemischt, so daß eine homogene Granulatmischung resultiert.

Alle Schichten enthielten zur Stabilisierung 0,12 Gew.-% Pentaerythrityl-Tetrakis-4-(3,5-ditertiärbutyl-4-hydroxyphenyl)-propionat (®Irganox 1010) sowie als Neutralisationsmittel 0,06 Gew.-% Calciumstearat.

Die extrudierte Dreischichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion | Extrusionstemperatur 260°C |
| | Temperatur der ersten Abzugswalze 30°C |
| | Temperatur des Walzentrios 30°C |
| Längsstreckung | Streckwalze T = 115°C |
| | Längsstreckung um den Faktor 5 |
| Querstreckung | Aufheizfelder T = 175°C |
| | Streckfelder T = 165°C |
| | Querstreckung um den Faktor 10 |
| Fixierung | Temperatur T = 155°C |
| Coronabehandlung | Spannung: 10.000 V |
| | Frequenz: 10.000 Hz |

Die so hergestellte Mehrschichtfolie wies direkt nach der Herstellung eine Oberflächenspannung von 40 bis 41 mN/m auf. Die Folie war ca. 20 µm dick, wobei jede Deckschicht ca. 0,8 µm Dicke hatte.

### Vergleichsbeispiel 1

Es wurde eine Folie wie in Beispiel 1 beschrieben hergestellt. Im Unterschied zu Beispiel 1 wurde für die Deckschicht D1 statt des linearen Polyolefins ein statistisches Ethylen-Propylen-Copolymer eingesetzt, welches der Komponente B der Deckschicht 2 des Beispiels 1 entsprach. Dieses Propylen-Ethylen-Copolymer hatte daher einen Ethylengehalt von 3,5 Gew.-%, bezogen auf das Gewicht des Copolymeren und einem Schmelzpunkt von 138°C nach DSC-Messung und einem Schmelzflußindex von 6,0 g/10 min bei 230°C und 2,16 kg Belastung (DIN 53 735). Wie in Beispiel 1 beschrieben enthielt die Deckschicht D1 0,2 Gew.-% des gleichen SiO₂ als Antiblockmittel.

### Vergleichsbeispiel 2

Es wurde eine Folie wie in Beispiel 1 beschrieben hergestellt. Im Unterschied zu Beispiel 1 wurde für die Deckschicht D1 statt des linearen Polyolefins ein statistisches Ethylen-Propylen-Butylen-Terpolymer eingesetzt, welches einen Ethylengehalt von 4,0 Gew.-% und einen Butylengehalt von 2 Gew.-% und einen Propylengehalt von 94 Gew.-% hatte, jeweils bezogen auf das Gewicht des Terpolymeren. Das Terpolymere hatte einen Schmelzpunkt von 125°C nach DSC-Messung und einem Schmelzflußindex von 6,0 g/10min bei 230°C und 2,16 kg Belastung (DIN 53735). Wie in Beispiel 1 beschrieben enthielt die Deckschicht D1 0,2 Gew.-% des gleichen SiO₂ als Antiblockmittel.

### Vergleichsbeispiel 3

Es wurde eine Folie wie in Beispiel 1 beschrieben hergestellt. Im Unterschied zu Beispiel 1 wurde für die Deckschicht D1 statt des linearen Polyolefins ein Polyethylen niedriger Dichte (LDPE) nach dem Stand der Technik eingesetzt. Das LDPE hatte eine Dichte von 0,916 g/cm³ und hatte einen Vicat Erweichungspunkt von 85°C und einem Schmelzflußindex von 8,0 g/10min bei 190°C und 2,16 kg Belastung (DIN 53 735). Wie in Beispiel 1 beschrieben enthielt die Deckschicht D1 0,2 Gew.-% des gleichen SiO₂ als Antiblockmittel.

### Vergleichsbeispiel 4

Es wurde eine Folie wie in Beispiel 1 beschrieben hergestellt. Im Unterschied zu Beispiel 1 wurde für die Deckschicht D1 statt des linearen Polyolefins ein lineares Polyethylen niedriger Dichte (LLDPE) nach dem Stand der Technik eingesetzt. Das LLDPE hatte eine Dichte von 0,921g/cm³ und einen Schmelzpunkt von 119°C nach DSC-Messung und einem Schmelzflußindex von 5,5 g/10min bei 190°C und 2,16 kg Belastung (DIN 53 735). Wie in Beispiel 1 beschrieben enthielt die Deckschicht D1 0,2 Gew.-% des gleichen SiO₂ als Antiblockmittel.

### Vergleichsbeispiel 5

Es wurde eine Folie wie in Beispiel 1 beschrieben hergestellt. Im Unterschied zu Beispiel 1 wurde für die Deckschicht D2 statt der Polymermischung aus Propylenhomopolymer und Copolymer nur das Propylenhomopolymer, mit einem n-heptanlöslichen Anteil von 4,5 Gew.-% und einem Schmelzpunkt von 165°C. und einem Schmelzflußindex MFI von 6,0g/10min bei 230°C und 2,16 kg Belastung (DIN 53 735) eingesetzt. Wie in Beispiel 1 beschrieben enthielt die Deckschicht D2 0,2 Gew.-% des gleichen SiO₂ als Antiblockmittel.

### Vergleichsbeispiel 6

Es wurde eine Folie wie in Vergleichsbeispiel 1 beschrieben hergestellt. Im Unterschied zu Beispiel 1 enthielt die Basisschicht jetzt kein Erucasäureamid.

### Beispiel 2

Es wurde eine Folie wie in Beispiel 1 beschrieben hergestellt. Im Unterschied zu Beispiel 1 wurde in der Deckschicht D2 statt PMMA als Antiblockmittel wurde ein Na-Al-Silikat mit einem mittleren Teilchendurchmesser von 4 µm und in einer Menge von 0,3 Gew.-% eingesetzt.

Zur Charakterisierung der Rohstoffe und der Folien wurden die folgenden Meßmethoden benutzt:

### Schmelzflußindex

Der Schmelzflußindex wurde in Anlehnung an DIN 53 735 bei 2,16 kg Belastung und 230°C bzw. bei 5,0 kg Belastung und 190°C gemessen.

### Schmelzpunkt, Schmelzbereich und Kristallisationsintervall

DSC-Messung, Maximum der Schmelzkurve, Aufheizgeschwindigkeit, bzw. Abkühlgeschwindigkeit 10 K/min (Perkin Elmer DSC 7).

### Vicat-Erweichungspunkt

Der Vicat-Erweichungspunkt wird nach DIN 63 460 bestimmt.

### Dichte

Die Dichte wird nach DIN 53 479, Verfahren A, bestimmt.

### Reibungskoeffizient

Der statische und der dynamische Reibungskoeffizient wird nach DIN 53 375 bestimmt.

### Oberflächenspannung

Die Oberflächenspannung wurde mittels der sogenannten Tintenmethode (DIN 53 364) bestimmt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

### Haftfestigkeit

Die Haftfestigkeit wird an einem Zugprüfungsgerät oder an einem Reibungsprüfgerät nach der T-Peel Methode bestimmt. Hierfür werden die angetrennten Enden einer Laminatprobe von 2,54 mm (1 Zoll) Breite in das Prüfgerät eingespannt und anschließend mit einer Geschwindigkeit von 100 mm/min über eine Zeitspanne von 24 s auseinandergezogen. Nach einer Vorlaufzeit von 4 s beginnt die Messung der Peelkraft, welche als Mittelwert über die Meßzeit von 20s in g/Zoll bestimmt wird. Um das Antrennen der Folienenden zu erleichtern taucht man ein Ende der Laminatprobe (bis zu 20min) in ein organische Lösungsmittel, wie z.B. Toluol.

| BEISPIEL | COF DYNAMISCH D2 SEITE | COF STATISCH D2 SEITE | COF DIFFERE NZ | HAFTFESTIGKEIT VON D1 GEGENÜBER POLYETHYLEN EXTRUSIONSSCHICHT (++ = SEHR GUT) |
|---|---|---|---|---|
| B1 | 0,25 | 0,30 | 0,05 | ++ |
| VB1 | 0,25 | 0,30 | 0,05 | -- |
| VB2 | 0,25 | 0,30 | 0,05 | -- |
| VB3 | 0,25 | 0,30 | 0,05 | -- |
| VB4 | 0,25 | 0,30 | 0,05 | - |
| VB5 | 0,25 | 0,50 | 0,25 | ++ |
| VB6 | 0,40 | 0,60 | 0,20 | ++ |
| B2 | 0,35 | 0,40 | 0,05 | ++ |

## Patentansprüche

1. Verwendung einer mehrschichtigen, biaxial orientierten Polyolefinfolie zur Herstellung eines Laminats mittels Schmelzeextrusion, **dadurch gekennzeichnet, daß** die Polyolefinfolie eine Basisschicht und mindestens eine Deckschicht D1 aufweist, wobei die Basisschicht ein Fettsäureamid enthält und die Deckschicht D1 mindestens 80 Gew.-% eines lineares Olefinpolymer enthält und das lineares Olefinpolymer 99,5 - 92 Gew.-% Ethylen und 0,5 - 8 Gew.-% Okteneinheiten enthält und das Kristalllsationsintervall des linearen Olefinpolymers , bestimmt mittels DSC bei 20K/min, im Bereich von 90 - 120°C liegt.

2. Verwendung gemäß Anspruch 1, **dadurch gekennzeichnet, daß** das die zur Laminierung aufgebrachte Extrusionsschicht aus Polyethylen ist.

3. Verwendung gemäß Anspruch 1 oder 2, **dadurch gekennzeichnet, daß** das lineare Olefinpolymer einen MFI , 5,0 kg/190°C, von 0,2 bis 20 g/10min , gemessen nach DIN 53 735, und einen Schmelzpunkt von 100 bis 150°C nach DSC-Messung aufweist.

4. Verwendung gemäß einem oder mehreren der Ansprüche 1 bis 3, **dadurch gekennzeichnet, daß** die Deckschicht D1 ein Antiblockmittel mit einer mittlere Teilchengröße zwischen 1 und 6 µm in einer Menge von 0,05 bis 1 Gew.-% enthält.

5. Verwendung gemäß einem oder mehreren der Ansprüche 1 bis 4, **dadurch gekennzeichnet, daß** die Deckschicht D1 einem Verfahren zur Erhöhung der Oberflächenspannung ausgesetzt wird.

6. Verwendung gemäß einem oder mehreren der Ansprüche 1 bis 5, **dadurch gekennzeichnet, daß** die Basisschicht Fettsäureamide, vorzugsweise Erucasäureamid, in einer Menge von 0,01 bis 0,5 Gew.-%, bezogen auf das Gewicht der Basisschicht, enthält.

7. Verwendung gemäß einem oder mehreren der Ansprüche 1 bis 6, **dadurch gekennzeichnet, daß** das Propylenpolymere der Basisschicht mindestens 90 Gew.-% Propylen enthält und einen Schmelzpunkt von mindestens 140°C besitzt und der Schmelzflußindex im Bereich von 0,5 bis 10g/10min liegt.

8. Verwendung gemäß einem oder mehreren der Ansprüche 1 bis 7, **dadurch gekennzeichnet, daß** die Folie auf der gegenüberliegenden Seite eine weitere Deckschicht D2 aufweist, welche mindestens 80 Gew.-% einer Mischung aus den Komponenten A und B enthält, wobei die Komponente A ein Propylenhomopolymer ist und die Komponente B ein Propylenco- und/oder ein Propylenterpolymer ist.

9. Verwendung gemäß Anspruch 8, **dadurch gekennzeichnet, daß** die Komponente A einen Schmelzpunkt von 150 - 170°C und einen MFI von 5 - 8 g/10min aufweist und in einer Menge von 50 bis 90 Gew.-% enthalten ist und die Komponente B einen Schmelzpunkt von 115 - 135°C und einen MFI von 3 - 15 g/10min aufweißt und in einer Menge von 50 bis 10 Gew.-% enthalten ist, wobei die Angabe in Gew.-% jeweils auf das Gewicht der Deckschicht bezogen ist.

10. Verwendung nach Anspruch 9, **dadurch gekennzeichnet, daß** die Deckschicht D2 Antiblockmittel, vorzugsweise Polymethylmethacrylat, in einer Menge von 0,01 - 0,5 Gew.-%, bezogen auf das Gewicht der Deckschicht D2 enthält.

11. Verwendung nach Anspruch 8, 9 und/oder 10, **dadurch gekennzeichnet, daß** sich der dynamische und der statische Reibungskoeffizient der Deckschicht D2 um nicht mehr als 0,2 Einheiten voneinander unterscheiden.

12. Verfahren zur Herstellung eines Folienlaminats, bei welchem eine mehrschichtige Polyolefinfolie mit einer weiteren Folie laminiert wird, **dadurch gekennzeichnet, daß** die mehrschichtige Polyolefinfolie mit Polyethylen beschichtet wird und dieses Beschichtung mittel Extrusion erfolgt und die mehrschichtige Polyofefinfolie eine Basisschicht und mindestens eine Deckschicht D1 aufweist, wobei die Basisschicht ein Fettsäureamid enthält und die Deckschicht D1 mindestens 80 Gew.-% eines lineares Olefinpolymer enthält und das lineares Olefinpolymer 99,5 - 92 Gew.-% Ethylen und 0,5 - 8 Gew.-% Okteneinheiten enthält und das Kristallisationsintervall , bestimmt mittels DSC bei 20K/min, im Bereich von 90 - 120°C liegt.

## Claims

1. Use of a multilayer, biaxially oriented polyolefin film for the production of a laminate by melt extrusion, **characterized in that** the polyolefin film has a base layer and at least one top layer D1, where the base layer comprises a fatty acid amide, and the top layer D1 comprises at least 80% by weight of a linear olefin polymer, and the linear olefin polymer comprises 99.5 - 92% by weight of ethylene and 0.5 - 8% by weight of octene units, and the crystallization interval of the linear olefin polymer, determined by means of DSC at 20 K/min, is in the range 90 - 120°C.

2. Use according to Claim 1, **characterized in that** the extrusion layer applied for lamination is made of polyethylene.

3. Use according to Claim 1 or 2, **characterized in that** the linear olefin polymer has an MFI, 5.0 kg/190°C, of from 0.2 to 20 g/10 min, measured in accordance with DIN 53 735, and a melting point of from 100 to 150°C according to DSC measurement.

4. Use according to one or more of Claims 1 to 3, **characterized in that** the top layer D1 comprises an antiblocking agent having a mean particle size of between 1 and 6 µm in an amount of from 0.05 to 1% by weight.

5. Use according to one or more of Claims 1 to 4, **characterized in that** the top layer D1 is subjected to a process for increasing the surface tension.

6. Use according to one or more of Claims 1 to 5, **characterized in that** the base layer comprises fatty acid amides, preferably erucamide, in an amount of from 0.01 to 0.5% by weight, based on the weight of the base layer.

7. Use according to one or more of Claims 1 to 6, **characterized in that** the propylene polymer of the base layer comprises at least 90% by weight of propylene and has a melting point of at least 140°C, and the melt flow index is in the range from 0.5 to 10 g/10 min.

8. Use according to one or more of Claims 1 to 7, **characterized in that** the film has on the opposite side a further top layer D2 which comprises at least 80% by weight of a mixture of components A and B, where component A is a propylene homopolymer and component B is a propylene copolymer and/or a propylene terpolymer.

9. Use according to Claim 8, **characterized in that** component A has a melting point of 150 - 170°C and an MFI of 5 - 8 g/10 min and is present in an amount of from 50 to 90% by weight, and component B has a melting point of 115 - 135°C and an MFI of 3 - 15 g/10 min and is present in an amount of from 50 to 10% by weight, where the data in % by weight are in each case based on the weight of the top layer.

10. Use according to Claim 9, **characterized in that** the top layer D2 comprises antiblocking agents, preferably polymethyl methacrylate, in an amount of 0.01 - 0.5% by weight, based on the weight of the top layer D2.

11. Use according to Claim 8, 9 and/or 10, **characterized in that** the dynamic and static coefficients of friction of the top layer D2 differ from one another by not more than 0.2 units.

12. Process for the production of a film laminate in which a multilayer polyolefin film is laminated to a further film, **characterized in that** the multilayer polyolefin film is coated with polyethylene, and this coating is carried out by means of extrusion, and the multilayer polyolefin film has a base layer and at least one top layer D1, where the base layer comprises a fatty acid amide, and the top layer D1 comprises at least 80% by weight of a linear olefin polymer, and the linear olefin polymer comprises 99.5 - 92% by weight of ethylene and 0.5 - 8% by weight of octene units, and the crystallization interval, determined by means of DSC at 20 K/min, is in the range 90 - 120°C.

## Revendications

1. Utilisation d'un film de polyoléfine multicouches biaxialement orienté, destiné à la fabrication d'un composite au moyen de l'extrusion de matières en fusion, **caractérisé en ce que** le film de polyoléfine présente une couche de base et au moins une couche de surface D1, la couche de base contenant un amide d'acide gras et la couche de surface D1 contenant au moins 80 % en poids d'un polymère d'oléfine linéaire et le polymère d'oléfine linéaire contenant 99,5 à 92 % en poids d'éthylène et 0,5 à 8 % en poids d'unités d'octène et l'intervalle de cristallisation du polymère d'oléfine linéaire, déterminé au moyen d'une mesure DSC à 20K/min, étant situé dans une plage de 90 à 120 °C.

2. Utilisation selon la revendication 1, **caractérisé en ce que** la couche d'extrusion appliquée pour l'enduction est en polyéthylène.

3. Utilisation selon l'une des revendications 1 ou 2, **caractérisée en ce que** le polymère d'oléfine linéaire présente un MFI (indice de fluidité à chaud), à 5,0 kg/190 °C, de 0,2 à 20 g/10 min, mesuré selon DIN 53 735, et un point de fusion de 100 à 150 °C d'après une mesure DSC.

4. Utilisation selon l'une ou plusieurs des revendications 1 à 3, **caractérisée en ce que** la couche de surface D1 contient un agent anti blocking ayant une dimension de particule moyenne entre 1 et 6 µm dans une quantité de 0,05 à 1 % en poids.

5. Utilisation selon l'une ou plusieurs des revendications 1 à 4, **caractérisée en ce que** la couche de surface D1 est soumise à un procédé destiné à augmenter la tension de surface.

6. Utilisation selon l'une ou plusieurs des revendications 1 à 5, **caractérisée en ce que** la couche de base contient des amides d'acide gras, de préférence un amide d'acide érucique dans une quantité de 0,01 à 0,5 % en poids, rapporté au poids de la couche de base.

7. Utilisation selon l'une ou plusieurs des revendications 1 à 6, **caractérisée en ce que** le polymère de propylène de la couche de base contient au moins 90 % en poids de propylène et possède un point de fusion d'au moins 140 °C et l'indice de fluidité à chaud se situe dans une plage de 0,5 à 10 g/10 min.

8. Utilisation selon l'une ou plusieurs des revendications 1 à 7, **caractérisée en ce que** le film présente sur la face opposée une autre couche de surface D2, laquelle contient au moins 80 % en poids d'un mélange à base des composants A et B, le composant A étant un homopolymère de propylène et le composant B étant un copolymère de propylène et/ou un terpolymère de propylène.

9. Utilisation selon la revendication 8, **caractérisée en ce que** le composant A présente un point de fusion de 150 à 170 °C et un MFI de 5 à 8 g/10 min et est contenu dans une quantité de 50 à 90 % en poids, et le composant B présente un point de fusion de 115 à 135 °C et un MFI de 3 à 15 g/10 min dans une quantité de 50 à 10 % en poids, l'indication en pour cents en poids se rapportant respectivement au poids de la couche de surface.

10. Utilisation selon la revendication 9, **caractérisée en ce que** la couche de surface D2 contient un agent anti blocking, de préférence un polyméthylacrylate de méthyle (PMMA) dans une quantité de 0,01 à 0,5 % en poids, rapporté au poids de la couche de surface D2.

11. Utilisation selon la revendication 8, 9 et/ou 10, **caractérisée en ce que** le coefficient de frottement dynamique et le coefficient de frottement statique de la couche de surface D2 ne se différencient pas l'un de l'autre de plus de 0,2 unités.

12. Procédé destiné à la fabrication d'un film composite avec lequel un film de polyoléfine multicouches est enduit avec un autre film, **caractérisé en ce que** le film de polyoléfine multicouches est enduit avec du polyéthylène et que cette enduction se produit au moyen d'une extrusion et que le film de polyoléfine multicouches présente une couche de base et au moins une couche de surface D1, la couche de base contenant un amide d'acide gras et la couche de surface D1 contenant au moins 80 % en poids d'un polymère d'oléfine linéaire et le polymère d'oléfine linéaire contenant 99,5 à 92 % en poids d'éthylène et 0,5 à 8 % en poids d'unités d'octène et l'intervalle de cristallisation, déterminé au moyen d'une mesure DSC à 20K/min, étant situé dans une plage de 90 à 120 °C.
